# EUROPEAN PATENT APPLICATION

(11) **EP 4 318 720 A1**
(43) Date of publication of application: **07.02.2024**
(21) Application number: 22897383.0
(22) Date of filing: 29.09.2022
(51) Int. Cl.: H01M 10/0583, H01M 10/0585, H01M 50/593, H01M 10/0525, H01M 4/13, H01M 10/0587, H01M 50/597

(54) **POSITIVE ELECTRODE PLATE AND BATTERY**

(30) Priority: 25.11.2021 CN 202122918591 U
(71) Applicant: Contemporary Amperex Technology Co., Limited, Ningde, Fujian 352100 (CN)
(72) Inventor: CHANG, Wen, Ningde, Fujian 352100 (CN); FU, Chenghua, Ningde, Fujian 352100 (CN); YE, Yonghuang, Ningde, Fujian 352100 (CN); ZHANG, Chenchen, Ningde, Fujian 352100 (CN); ZHU, Chang, Ningde, Fujian 352100 (CN)
(74) Representative: Ran, Handong
(86) International application number: PCT/CN2022/122826
(87) International publication number: WO 2023/093298

(57) **Abstract**

The present application provides a positive electrode plate and a battery. The positive electrode plate comprises: a cuboid-shaped main body which is formed by stacking a positive electrode active material layer and a positive electrode current collector in a first direction and comprises four side surfaces and two end surfaces opposite to each other in the first direction, the four side surfaces being a first side surface to a fourth side surface; a positive electrode tab formed by extending the positive electrode current collector from the first side surface to the outside of the main body; and an insulating layer formed to cover 95% or more of the second side surface to the fourth side surface.

## Description

### TECHNICAL FIELD

The present application relates to the technical field of batteries, and in particular, to a cathode plate and a battery.

### BACKGROUND

In recent years, with the continuous development of lithium-ion battery technology, lithium-ion batteries are widely used in energy storage power systems such as water power, firepower, wind power, and solar power stations, as well as fields like power tools, electric bicycles, electric motorcycles, electric vehicles, military equipment, aerospace, and the like. Due to the great development of lithium-ion batteries, higher requirements have been raised for their safety performance, and so on.

The manufacture of the laminated lithium-ion battery and the wound lithium-ion battery both require the cutting of electrode plates. Especially when cutting a cathode plate, it is easy to produce burrs on the cutting surface of the cathode plate, and the burrs may penetrate the separator, or, due to the design of the cathode plate exceeding the anode plate (overhang), when the separator shrinks, burrs on the cutting edge of the cathode plate overlap with the anode plate, or, lithium precipitation forms when the cathode plate exceeds the anode plate after the electrode plates are misaligned, and the lithium dendrites overlap with the burrs or leaked aluminum (leaked cathode current collector), which causes a short circuit and affects the safety performance of the battery.

### SUMMARY

The technical problem to be solved in the present application:
In view of the above technical problems, an objective of the present application provides a cathode plate and a battery, which prevent the short circuit caused by burrs and improve the safety performance.

Technical proposals to overcome the technical problems:
In order to achieve at least the above objective, the present application provides a cathode plate and a battery.

A first aspect of the present application provides a cathode plate, which is arranged in a laminated battery, including: a cuboid main body, formed by stacking a cathode active material layer and a cathode current collector in a first direction, the main body having four side faces and two end faces, the two end faces being arranged oppositely to each other in the first direction, and the four side faces being the first side face to the fourth side face and being respectively connected to the two end faces along the first direction; a cathode tab, formed by the cathode current collector extending from the first side face to an outside of the main body; and an insulating layer, formed on the second side face to the fourth side face and covering 95% or more of each side face of the second side face to the fourth side face.

The electrode plate that can be arranged in the laminated battery of the present application has four side faces, and the four side faces are all cutting surfaces, the cathode tab is located on the first side face, and the insulating layer is provided on the second to the fourth side faces and covers 95% or more of each side face of the second to fourth side faces. Thus, the insulating layer formed on the second to the fourth side faces can wrap the burrs formed on the second to the fourth side faces, thereby preventing a short circuit caused by the burrs and improving the safety performance of the laminated battery. In addition, since the cathode tab is located on the first side face, the method for forming an insulating layer on the first side is relatively complicated. Therefore, an insulating layer with a coverage of 95% or higher is formed on the second to the fourth side faces respectively, and no insulating layer is formed on the first side face having the cathode tab, which can improve the safety performance of the laminated battery, such that the production efficiency of the laminated battery is improved.

In some implementations, the insulating layer is also formed on the first side face and covers 95% or more of all other areas of the first side face except an area where the cathode tab is formed.

Accordingly, the insulating layer is not only formed with a coverage of 95% or more on the second side face to the fourth side face, but also formed with a coverage of 95% or more on all other areas of the first side face except the area where the cathode tab is formed, thus it can wrap the burrs formed on the first side face to the fourth side face, that is, it can wrap the burrs on all cutting surfaces of the cathode plate and further improve the safety performance of the laminated battery.

In some implementations, the insulating layer extends from the side faces on which the insulating layer is formed to the end faces connected to the side faces, and a length extending on the end faces that are connected to the side face is no more than 0.5 mm.

Accordingly, the insulating layer formed on the side faces of the cathode plate extends on the end faces connected to the side faces, so the insulating layer can wrap the burrs extending from the side faces to the end faces, preventing the short circuit caused by shrinkage of the separator, etc., and the length of the extension is no more than 0.5 mm, so the insulating layer can prevent the anode plate from being squeezed through the separator due to excessive insulating layers, and further improve the safety performance of the laminated battery.

In some implementations, a thickness of the insulating layer on the side faces on which the insulating layer is formed is 2 -30 µm.

Accordingly, the thickness of the insulating layer on the side faces on which the insulating layer is formed is no less than 2 µm, which avoids that the insulating layer is too thin to completely cover the burrs when the burrs are long, and the thickness of the insulating layer on the side faces on which the insulating layer is formed is no more than 30 µm, which avoids the insulating layer from falling off and forming particles due to the insulating layer being too thick, and improves the safety performance of the laminated battery.

A second aspect of the present application provides a cathode plate, which is arranged in a wound battery, including: a main body capable of being wound into a helical shape around an axial direction, the main body being formed by stacking a cathode active material layer and a cathode current collector, the main body having two main faces, and the two main faces being two opposite faces along a stacking direction of the cathode active material layer and the cathode current collector; a cathode tab, which is formed by the cathode current collector extending from a top face to an outside of the main body along the axial direction, the top face being perpendicular to the axial direction and connected with the two main faces; and an insulating layer, which is formed on a bottom face and covering 95% or more of the bottom face, the bottom face being opposite to the top face in the axial direction and being perpendicular to the axial direction and connected with the two main faces.

The cathode plate that can be arranged in a wound battery of the present application has a top face, a bottom face, and two main faces, in which the top face and the bottom face are both cutting surfaces, and an insulating layer is arranged on the bottom face covering 95% or more of the bottom face. Thus, the insulating layer formed on the bottom face can wrap the burrs formed on the bottom face, prevent short circuits caused by the burrs, and improve the safety performance of the wound battery. In addition, since the top face has a cathode tab, the method of forming an insulating layer on the top face is relatively complicated. Therefore, an insulating layer with a coverage of 95% or more is formed on the bottom face, and no insulating layer is formed on the top face having the cathode tab, which can improve the production efficiency of the wound battery while improving the safety performance thereof.

In some implementations, the insulating layer extends from the bottom face to the main faces connected to the bottom face, and a length extending on the main faces connected to the bottom face is no greater than 0.5 mm.

Accordingly, the insulating layer formed on the bottom face of the cathode plate extends on the main faces connected to the bottom face, so the burrs extending from the bottom face to the main faces can be wrapped to prevent short circuits caused by shrinkage of the separator, etc., and the length of the extension is no greater than 0.5 mm, so the insulating layer can be prevented from pressing the anode plate through the separator, and the safety performance of the wound battery can be further improved.

In some implementations, a thickness of the insulating layer on the bottom face is 2 µm -30 µm.

Accordingly, the thickness of the insulating layer on the bottom face is no less than 2 µm, which avoids that the insulation layer is too thin to completely cover the burrs when the burrs are long, and the thickness of the insulating layer on the bottom face is no more than 30 µm, which prevents the insulating layer from falling off to form particles due to the insulating layer being too thick, and improves the safety performance of the wound battery.

In some implementations, two thinned parts recessed toward the top face are respectively provided on the bottom face in areas connected to the two main faces, and the insulating layer is arranged on the thinned parts.

Accordingly, the thinned parts recessed toward the top face are respectively formed on the bottom face in the areas close to the two main faces, and the insulating layer is arranged on the thinned parts, so that the insulating layer can be prevented from extending too long on the main faces and squeezing the anode plate through the separator, and the burrs extending from the bottom face to the main faces are wrapped to further improve the safety performance of the laminated battery.

In some implementations, a sum of thicknesses of the insulating layer in each thinned part and the main body is no greater than a thickness of the main body outside the thinned parts.

Accordingly, the insulating layer on the thinned parts does not protrude beyond the main faces of the cathode plate, so the insulating layer can be prevented from squeezing the anode plate through the separator, and the safety performance of the laminated battery can be further improved.

In some implementations, the thinned parts are in a cuboid shape, a thickness along a direction perpendicular to the main faces is 5 µm or less, and a length along the axial direction is 0.5 -5 mm.

Accordingly, the thinned parts are formed into a cuboid shape, and the thickness along the direction perpendicular to the main faces is 5 µm or less, and the length along the axial direction is 0.5 -5 mm, so that the insulating layer can wrap the burrs extending from the bottom face to the main faces without occupying a significant volume of the main body, thereby ensuring that the energy density of the battery is sufficiently high.

With respect to the cathode plates of the first aspect and the second aspect of the present application, in some implementations, the insulating layer is coated by one of spray coating, spot coating, and dip coating.

Since the insulating layer is formed on the cathode plate in advance, the forming of the insulating layer will not be hindered by the structure of the laminated battery or the wound battery, and the insulating layer can be formed by one of spray coating, spot coating, and dip coating, thereby simplifying the manufacturing process.

With respect to the cathode plate of the first aspect and the second aspect of the present application, in some implementations, a ceramic slurry for making the insulating layer includes at least a ceramic material, a binder, and a solvent, and the ceramic material accounts for 10 - 70wt%, the binder accounts for 1-5wt%, and a viscosity of the ceramic slurry is 100 -1000 mPa·s.

Accordingly, the insulating layer is made of the ceramic slurry including at least a ceramic material, a binder, and a solvent, so the insulation and adhesion of the insulating layer can be ensured, and the ceramic material accounts for 10 -70wt%, the binder accounts for 1 -5wt%, and the viscosity of the ceramic slurry is 100 -1000 mPa·s, which avoids the insufficient insulation due to the ceramic material being little, or the insufficient adhesion that will cause the insulating layer to fall off due to excessive ceramic material.

With respect to the cathode plates of the first aspect and the second aspect of the present application, in some implementations, the ceramic material is one of pseudoboehmite, magnesium oxide, silicon carbide, and silicon nitride, preferably pseudoboehmite; the binder is one or a combination of polyvinylidene fluoride, polyacrylate, methyl acrylate, ethyl acrylate, 2-methyl methacrylate, and 2-ethyl methacrylate, preferably polyvinylidene fluoride; and the solvent is N-methylpyrrolidone.

Accordingly, adopting the above materials that are cheap and easy to obtain can reduce manufacturing costs to facilitate industrial production.

A third aspect of the present application provides a battery, which includes the cathode plate of the above-mentioned first aspect, an anode plate, and a separator, the cathode plate and the anode plate are alternately stacked in the first direction, and the separator is sandwiched between the cathode plate and the anode plate.

A fourth aspect of the present application provides a battery, which includes the cathode plate of the above-mentioned second aspect, an anode plate, and a separator, the cathode plate, the anode plate, and the separator are wound around the axial direction, and the separator is sandwiched between the cathode plate and the anode plate.

The advantageous effects of the present application are as follows:
The present application provides a cathode plate and a battery, which prevent a short circuit caused by burrs and improve the safety performance of the battery.

### BRIEF DESCRIPTION OF THE DRAWINGS

FIG. 1 is a front view of the laminated battery according to the present application;
FIG. 2 is a perspective view of the cathode plate of the laminated battery according to an embodiment of the present application;
FIG. 3 is a perspective view of the cathode plate of the laminated battery with the insulating layer being removed according to an embodiment of the present application;
FIG. 4 is a perspective view of the cathode plate of the laminated battery according to another embodiment of the present application;
FIG. 5 is a cross-sectional view of the cathode plate of the laminated battery according to the present application;
FIG. 6 is a schematic diagram of the wound battery according to the present application viewing along the axial direction of winding;
FIG. 7 is a cross-sectional view of the cathode plate of the wound battery according to an embodiment of the present application;
FIG. 8 is a cross-sectional view of the cathode plate of the wound battery according to another embodiment of the present application; and
FIG. 9 is a cross-sectional view of the cathode plate of the wound battery according to yet another embodiment of the present application.

Reference numbers in the drawings are as follows:
1 laminated battery; 11 cathode plate; 12 anode plate; 13 separator; 111 cathode current collector; 112 cathode active material layer; 113 insulating layer; 114 cathode tab; 11a, 11b end faces; 11c first side face; 11d second side face; 11e third side face; 11f fourth side face; 2 wound battery; 21 cathode plate; 22 anode plate; 23 separator; 211 cathode current collector; 212 cathode active material layer; 213 insulating layer; 214 cathode tab; 215 thinned part; 21a top face; 21b bottom face; and 21c, 21d main faces.

### DETAILED DESCRIPTION OF THE EMBODIMENTS

Hereinafter, embodiments of a cathode plate and a battery of the present application will be specifically disclosed in detail with reference to the accompanying drawings. However, unnecessary detailed description may be omitted. For example, detailed descriptions of well-known items and repeated descriptions of substantially the same configurations may be omitted. This is to avoid the following description from becoming unnecessarily lengthy and to facilitate the understanding of those skilled in the art. In addition, the drawings and the following descriptions are provided for those skilled in the art to fully understand the present application, and are not intended to limit the subject matter described in the claims.

The "range" disclosed in the application is defined in the form of lower limit and upper limit, and the given range is limited by selecting a lower limit and an upper limit, and the selected lower limit and upper limit define the boundary of a special range. Ranges defined in this manner may be inclusive or exclusive and may be combined arbitrarily, i.e., any lower limit may be combined with any upper limit to form a range. For example, if ranges of 60-120 and 80-110 are listed for a particular parameter, it is understood that ranges of 60-110 and 80-120 are contemplated. Additionally, if the minimum range values 1 and 2 are listed, and if the maximum range values 3, 4, and 5 are listed, the following ranges are all expected: 1-3, 1-4, 1-5, 2- 3, 2-4, and 2-5. In this application, unless otherwise stated, the numerical range "a-b" represents an abbreviated representation of any combination of real numbers between a and b, where a and b are both real numbers. For example, the numerical range "0-5" indicates that all real numbers between "0-5" have been listed in this article, and "0-5" is only an abbreviated representation of the combination of these values. In addition, when expressing that a certain parameter is an integer ≥ 2, it is equivalent to disclosing that the parameter is an integer such as 2, 3, 4, 5, 6, 7, 8, 9, 10, 11, 12, etc.

Unless otherwise specified, all implementation modes and optional implementation modes of the present application may be combined with each other to form new technical proposals.

Unless otherwise specified, all technical features and optional technical features of the present application may be combined with each other to form new technical proposals.

Unless otherwise specified, all the steps in the present application may be performed sequentially or randomly, preferably sequentially. For example, the method including steps (a) and (b) means that the method may include steps (a) and (b) performed in sequence, and may also include steps (b) and (a) performed in sequence. For example, mentioning that the method may also include step (c), means that step (c) may be added to the method in any order, for example, the method may include steps (a), (b) and (c), may also include steps (a), (c) and (b), and may also include steps (c), (a) and (b).

Unless otherwise specified, "include" and "comprise" mentioned in the application represent an open type or a closed type. For example, the "include" and "comprise" may mean that other components not listed may be included or comprised, or only listed components may be included or comprised.

Unless otherwise specified, in this application, the term "or" is inclusive. For example, the phrase "A or B" means "A, B, or both A and B." More specifically, the condition "A or B" is satisfied by either: A is true (or exists) and B is false (or does not exist); A is false (or does not exist) and B is true (or exists); or both A and B are true (or exist).

The inventors noticed that the manufacturing processes of a laminated lithium-ion battery and a wound lithium-ion battery both require cutting of the electrode plate. The electrode plate is formed by a current collector sandwiched by two layers of electrode active materials, or stacking of a layer of electrode active material layer and a current collector, in which the current collector of the cathode plate is composed of a metal foil (usually an aluminum foil), when cutting along the stacking direction, the cathode current collector is prone to produce burrs. The burrs may penetrate the separator sandwiched between the cathode plate and the anode plate, causing a short circuit as the burrs contact the cathode plate or the anode plate. In addition, due to the dislocation of the electrode plates that are prone to occur in the laminated battery, or the design of the cathode plate exceeding the anode plate (overhang) in the wound battery, the cathode plate exceeds the anode plate and lithium is deposited, thus when burrs exist, the burrs are likely to overlap with the lithium dendrite, resulting risk of short-circuit failure. Therefore, the burrs will affect the safety performance of the battery.

In the existing technology, in a laminated battery with a Z-shaped separator, that is, a continuous separator, the laminated cathode plate and anode plate have one side wrapped by the separator, the burrs on the one side cannot be completely covered by spray coating, brush coating, spot coating, or dip coating. In addition, in a wound battery, glue is applied to the edges of the wound cathode plate, separator, and anode plate to reduce the probability of burrs on the cutting edge, however, the separator is longer than the anode plate and the anode plate is longer than the cathode plate, that is, the edges of the separator, the cathode plate, and the anode plate are not on the same plane, so it is difficult to cover the burrs on the cutting edge of the cathode plate by spray coating, brush coating, spot coating, or dip coating.

Therefore, a first aspect of the present application provides a cathode plate, which is arranged in a laminated battery, including: a cuboid main body, cathode tab, and an insulating layer; the main body is formed by stacking a cathode active material layer and a cathode current collector in a first direction, the main body has four side faces and two end faces, the two end faces face each other in the first direction, and the four side faces are the first side face to the fourth side face and are respectively connected to the two end faces along the first direction; the cathode tab is formed by the cathode current collector extending from the first side face to an outside of the main body; and the insulating layer is formed on the second side face to the fourth side face and covers 95% or more of each side face of the second side face to the fourth side face.

The electrode plate that can be arranged in the laminated battery of the present application has four side faces, and the four side faces are all cutting surfaces, the cathode tab is located on the first side face, and the insulating layer is provided on the second to the fourth side faces and covers 95% or more of each side face of the second to the fourth side faces. Thus, the insulating layer formed on the second to the fourth side faces can wrap the burrs formed on the second to the fourth side faces, thereby preventing a short circuit caused by the burrs and improving the safety performance of the laminated battery. In addition, since the cathode tab is located on the first side face, the method for forming an insulating layer on the first side is relatively complicated. Therefore, an insulating layer with a coverage of 95% or higher is formed on the second to the fourth side faces respectively, and no insulating layer is formed on the first side face having the cathode tab, which can improve the safety performance of the laminated battery, such that the production efficiency of the laminated battery is improved.

A second aspect of the present application provides a cathode plate, which is arranged in a wound battery, including: a main body, a cathode tab, and an insulating layer; the main body can be wound into a helical shape around an axial direction, and is formed by stacking a cathode active material layer and a cathode current collector, the main body has two main faces, and the two main faces are two opposite faces along a stacking direction of the cathode active material layer and the cathode current collector; the cathode tab is formed by the cathode current collector extending from the top face to an outside of the main body along the axial direction, the top face is perpendicular to the axial direction and connects the two main faces; and the insulating layer is formed on a bottom face and covers 95% or more of the bottom face, the bottom face is opposite to the top face in the axial direction and perpendicular to the axial direction and connects the two main faces.

The cathode plate that can be arranged in a wound battery of the present application has a top face, a bottom face, and two main faces, in which the top face and the bottom face are both cutting surfaces, and an insulating layer is arranged on the bottom face covering 95% or more of the bottom face. Thus, the insulating layer formed on the bottom face can wrap the burrs formed on the bottom face, prevent short circuits caused by the burrs, and improve the safety performance of the wound battery. In addition, since the top face has a cathode tab, the method of forming an insulating layer on the top face is relatively complicated. Therefore, an insulating layer with a coverage of 95% or more is formed on the bottom face, and no insulating layer is formed on the top face having the cathode tab, which can improve the production efficiency of the wound battery while improving the safety performance thereof.

A third aspect of the present application provides a battery, which includes the cathode plate of the above-mentioned first aspect, an anode plate, and a separator, the cathode plate and the anode plate are alternately stacked in the first direction, and the separator is sandwiched between the cathode plate and the anode plate.

A fourth aspect of the present application provides a battery, which includes the cathode plate of the above-mentioned second aspect, an anode plate, and a separator, the cathode plate, the anode plate, and the separator are wound around the axial direction, and the separator is sandwiched between the cathode plate and the anode plate.

Hereinafter, the present application will be described in detail with reference to the accompanying drawings.

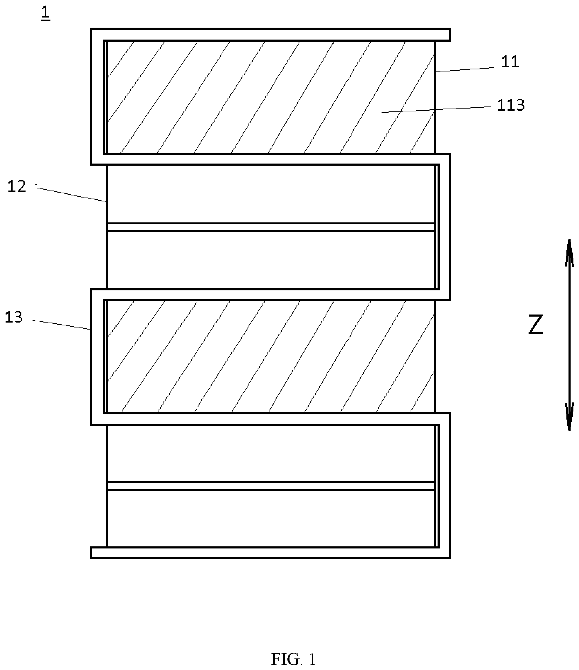

First, a laminated battery and a cathode plate thereof will be described. FIG. 1 is a front view of a laminated battery 1 of the present application. As shown in FIG. 1, the laminated battery 1 includes cathode plates 11, anode plates 12, and a separator 13. The cathode plates 11 and the anode plates 12 are stacked alternately in a first direction Z, and the separator 13 is sandwiched between the cathode plates 11 and the anode plates 12.

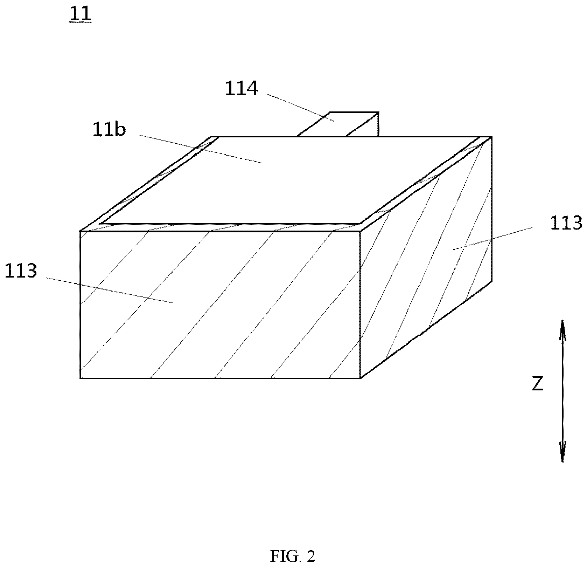

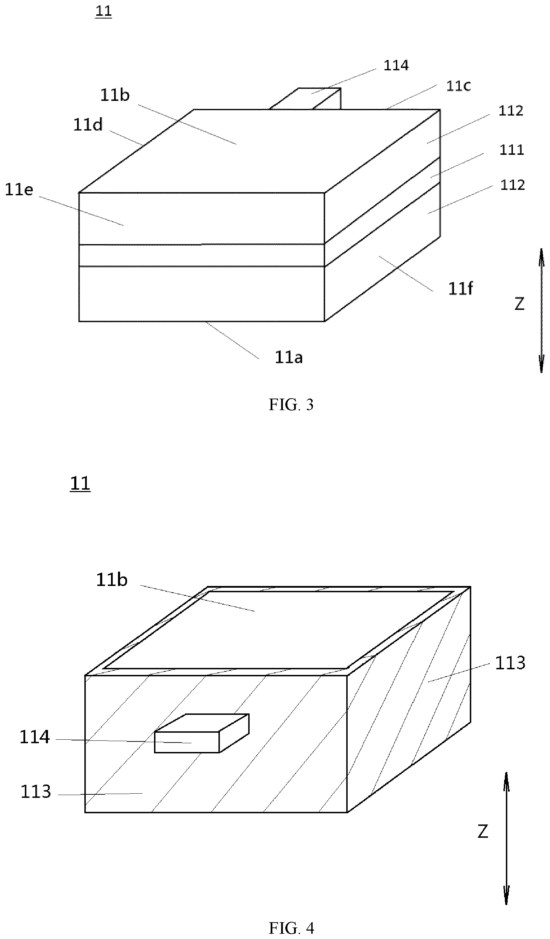

FIG. 2 is a perspective view of the cathode plate 11 of the laminated battery 1 according to an embodiment of the present application, and FIG. 3 is a perspective view of the cathode plate 11 of the laminated battery 1 with an insulating layer 113 being removed according to an embodiment of the present application. In FIGS. 2 and 3, a third side face 11e of the cathode 11 faces out of the paper. As shown in FIGS. 2 and 3, the cathode plate 11 includes a cuboid main body, a cathode tab 114, and an insulating layer 113. The cuboid main body is formed by stacking a cathode active material layer 112 and a cathode current collector 111 in the first direction Z. The number of the cathode active material layer 112 may be one or two. When the number of the cathode active material layer 112 is two, as shown in FIG. 3, the cathode current collector 111 is sandwiched between the two cathode active material layers 112 in the first direction Z. As shown in FIG. 3, the cuboid main body has four side faces 11c to 11f and two end faces 11a and 11b. The two end faces 11a and 11b face each other in the first direction Z. The four side faces 11c-11f are a first side face 11c, a second side face 11d, a third side face 11e, and a fourth side face 11f, and are respectively connected to the two end faces 11a, 11b along the first direction Z. The cathode tab 114 is formed by the cathode current collector 111 extending from the first side face 11c to an outside of the main body. The insulating layer 113 is formed on the second side face 11d to the fourth side face 11f, and covers 95% or more of each of the second side face 11d to the fourth side face 11f. FIG. 2 only shows the situation where the insulating layer 113 completely covers (100% coverage) the second side face 11d to the fourth side face 11f, but it is not limited thereto, the burrs can be wrapped as long as the insulating layer 113 has coverage of 95% or more.

The four side faces 11c~11f of the cathode 11 are all cutting surfaces, and the second side face 11d to the fourth side face 11f respectively have an insulating layer 113 with a coverage of 95% or more. Thus, the insulating layer 113 formed on the second side face 11d to the fourth side face 11f can wrap the burrs formed on the second side face 11d to the fourth side face 11f, thereby preventing short circuits caused by the burrs, and improving the safety performance of the laminated battery 1. Since the first side face 11c has the cathode tab 114, forming the insulating layer 113 on the first side face 11c is relatively complicated. Therefore, an insulating layer 113 with a coverage of 95% or more is formed on the second side face 11d to the fourth side face 11f, and no insulating layer 113 is formed on the first side face 11c having the cathode tab 114, so that the production efficiency of the laminated battery 1 can be improved while improving the safety performance of the laminated battery 1.

FIG. 4 is a perspective view of the cathode tab 11 of the laminated battery 1 according to another embodiment of the present application. In FIG. 4, the first side face 11c of the cathode 11 faces out of the paper. As shown in FIG. 4, in some embodiments, the insulating layer 113 is also formed on the first side face 11c and covers 95% or more of all other areas in the first side face 11c except the area where the cathode tab 114 is formed. FIG. 4 only shows that the insulating layer 113 completely covers (100% coverage) all other areas of the first side face 11c except the area where the cathode tab 114 is formed, but it is not limited thereto, the burrs can be wrapped as long as the insulating layer 113 has a coverage of 95% or more.

Accordingly, the insulating layer 113 is not only formed with a coverage of 95% or more on the second side face 11d to the fourth side face 11f, but also formed on the first side face 11c with a coverage of 95% or more on all other areas of the first side face 11c except the area where the cathode tab 114 is formed, thus it can wrap the burrs formed on the first side face 11c to the fourth side face 11f, that is, it can wrap the burrs on all cutting surfaces of the cathode plate 11 and further improve the safety performance of the laminated battery 1.

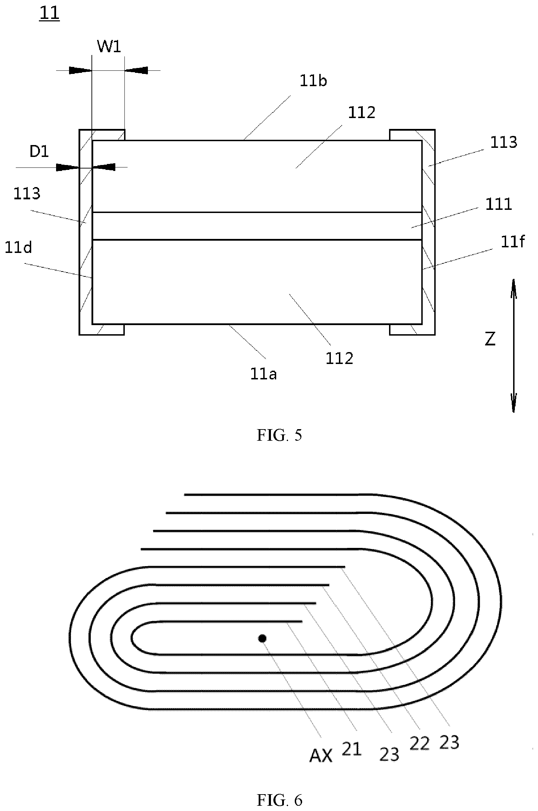

FIG. 5 is a cross-sectional view of the cathode plate 11 of the laminated battery 1 of the present application. As shown in FIGS. 2, 4, and 5, in some embodiments, the insulating layer 113 extends from the side faces that are formed with the insulating layer 113 (the second side face 11d to the fourth side face 11f in FIG. 2, the first side face 11c to the fourth side face 11f in FIG. 4) to the end faces 11a and 11b connected to the side faces, and the length W1 extending on the end faces 11a and 11b connected to the side faces is no greater than 0.5 mm.

Accordingly, the insulating layer 113 formed on the side faces of the cathode plate 11 extends on the end faces connected to the side faces, so the insulating layer 113 can wrap the burrs extending from the side faces to the end faces, preventing the short circuit caused by shrinkage of the separator 13, etc., and the length of the extension is no more than 0.5 mm, so the insulating layer 113 can be prevented from squeezing the anode plate 12 through the separator 13, and further improve the safety performance of the laminated battery 1.

As shown in FIG. 5, in some embodiments, a thickness D1 of the insulating layer 113 on the side faces where the insulating layer 113 is formed is 2 -30 µm.

Accordingly, the thickness of the insulating layer 113 on the side faces on which the insulating layer 113 is formed is no less than 2 µm, which avoids that the insulating layer 113 is too thin to completely cover the burrs when the burrs are long, and the thickness of the insulating layer 113 on the side faces on which the insulating layer 113 is formed is no more than 30 µm, which avoids the insulating layer 113 from falling off and forming particles due to the insulating layer 113 being too thick, and improves the safety performance of the laminated battery 1.

Hereafter, a wound battery and a cathode plate therein will be described. FIG. 6 is a schematic diagram of the wound battery 2 of the present application viewed along the axial direction AX of winding. As shown in FIG. 6, the wound battery 2 includes a cathode plate 21, an anode plate 22, and a separator 23. The cathode plate 21, the anode plate 22, and the separator 23 are wound around the axial direction AX. The separator 23 is sandwiched between the cathode plate 21 and the anode plate 22.

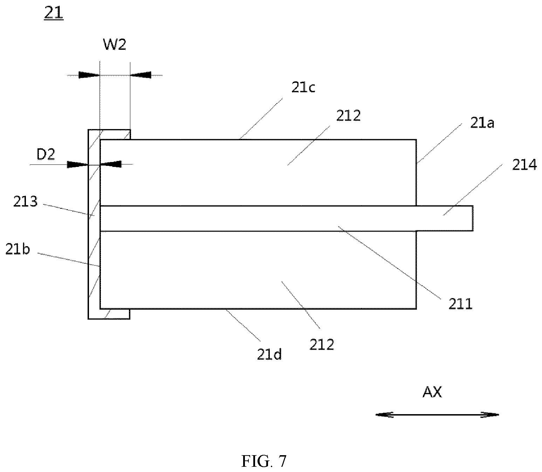

FIG. 7 is a cross-sectional view of the cathode plate 21 of the wound battery 2 according to an embodiment of the present application. The cathode plate 21 includes a main body, a cathode tab 214, and an insulating layer 213. The main body can be wound in a helical shape around the axial direction AX, and is formed by stacking a cathode active material layer 212 and a cathode current collector 211, the main body has two main faces 21c, 21d, and the two main faces 21c, 21d are two opposite faces along a stacking direction of the cathode active material layer 212 and the cathode current collector 211. The number of the cathode active material layer 212 may be one or two. When the number of the cathode active material layers 112 is two, as shown in FIGS. 7-9, the cathode current collector 211 is sandwiched between the two cathode active material layers 212, and the main faces 21c and 21d are formed by the faces of the cathode active material layer 212 away from the cathode current collector 211. The cathode tab is formed by the cathode current collector 211 extending from the top face 21a to an outside of the main body along the axial direction AX. The top face 21a is perpendicular to the axial direction AX and connects the two main faces 21c and 21d. The insulating layer 213 is formed on a bottom face 21b and covers 95% or more of the bottom face 21b. The bottom face 21b is opposite to the top face 21a in the axial direction AX and is perpendicular to the axial direction AX and connects the two main faces 21c and 21d. FIG. 7 only shows the case where the insulating layer 213 completely covers (100% coverage) the bottom face 21b, but it is not limited thereto, the burrs can be wrapped as long as the insulating layer 213 has a coverage of 95% or more.

The cathode plate 21 arranged in the wound battery 2 has the top face 21a, the bottom face 21b, and the two main faces 21c and 21d, in which the top face 21a and the bottom face 21b are both cutting surfaces. The cathode tab 214 is formed on the top face 21a, and the insulating layer 213 is arranged on the bottom face 21b covering 95% or more of the bottom face 21b. Thus, the insulating layer 213 formed on the bottom face 21b can wrap the burrs formed on the bottom face 21b, prevent short circuits caused by the burrs, and improve the safety performance of the wound battery. In addition, since the top face 21a has the cathode tab 214, the method of forming an insulating layer 213 on the top face 21a is relatively complicated. Therefore, the insulating layer 213 with a coverage of 95% or more is formed on the bottom face 21b, and no insulating layer 213 is formed on the top face 21a having the cathode tab 214, which can improve the production efficiency of the wound battery while improving the safety performance thereof.

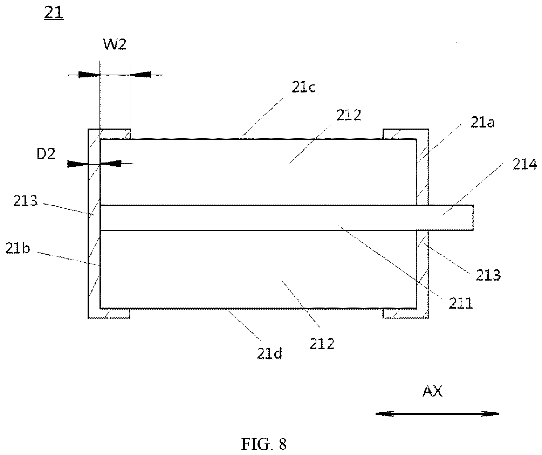

FIG. 8 is a cross-sectional view of the cathode plate 21 of the wound battery 2 according to another embodiment of the present application. As shown in FIG. 8, in some embodiments, the insulating layer 213 is also formed on the top face 21a, and covers 95% or more of all other areas in the top face 21a except the area in which the cathode tab 214 is formed. FIG. 8 only shows the case where the insulating layer 213 completely covers (100% coverage) all other areas in the top face 21a except the area where the cathode tab 214 is formed, but it is not limited thereto, the burrs can be wrapped as long as the insulating layer 213 has a coverage of 95% or more.

Accordingly, the insulating layer 213 is not only formed on the bottom face 21b with a coverage of 95% or more, but it is also formed on the top face 21a having the cathode tab 214 and covers 95% or more of all other areas in the top face 21a except the area in which the cathode tab 214 is formed. Therefore, the burrs formed on the top face 21a and the bottom face 21b can be wrapped, that is, the burrs on all the cutting faces of the cathode plate 21 can be wrapped, and the safety performance of the wound battery can be further improved.

As shown in FIG. 7, in some embodiments, the insulating layer 213 extends from the bottom face 21b to the main faces 21c and 21d connected to the bottom face 21b, and the length W2 extending on the main faces 21c, 21d connected to the bottom face 21b is no greater than 0.5 mm.

Accordingly, the insulating layer 213 formed on the bottom face 21b of the cathode plate 21 extends on the main faces 21c and 21d connected to the bottom face 21b, so the burrs extending from the bottom face 21b to the main faces 21c and 21d can be wrapped to prevent short circuits caused by shrinkage of the separator 23, etc., and the length of extension is no greater than 0.5 mm, so the insulating layer 213 can be prevented from pressing the anode plate 22 through the separator 23, and the safety performance of the wound battery can be further improved.

As shown in FIG. 7, in some embodiments, the thickness D2 of the insulating layer 213 on the bottom face 21b is 2 -30 µm.

Accordingly, the thickness of the insulating layer 213 on the bottom face 21b is no less than 2 µm, which avoids that the insulation layer 213 is too thin to completely cover the burrs when the burrs are long, and the thickness of the insulating layer 213 on the bottom face 21b is no more than 30 µm, which prevents the insulating layer 213 from falling off to form particles due to the insulating layer being too thick, and improves the safety performance of the wound battery.

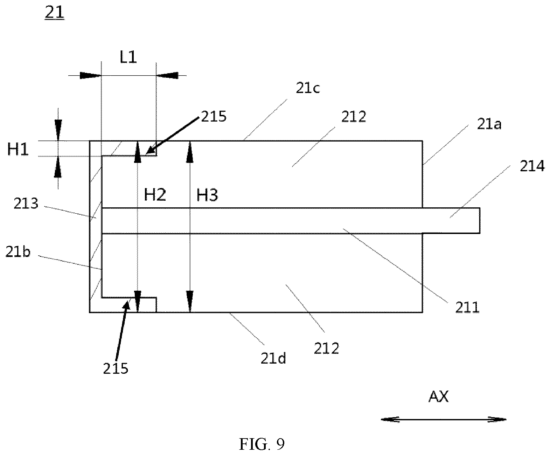

FIG. 9 is a cross-sectional view of the cathode plate 21 of the wound battery 2 according to still another embodiment of the present application. As shown in FIG. 9, in some embodiments, two thinned parts 215 recessed toward the top face 21a are respectively formed on the bottom face 21b in the areas connected to the two main faces 21c and 21d, and the thinned parts 215 are provided with an insulating layer 213.

Accordingly, the thinned parts 215 recessed toward the top face 21a are respectively formed on the bottom face 21b in the areas close to the two main faces 21c and 21d, and the insulating layer 213 is arranged on the thinned parts 215, so that the insulating layer 213 can be prevented from extending too long on the main faces 21c and 21d and squeezing the anode plate 22 through the separator 23, and the burrs extending from the bottom face 21b to the main faces 21c and 21d are wrapped to further improve the safety performance of the laminated battery 1.

As shown in FIG. 9, in some embodiments, a total thickness H2 of the insulating layer 213 in each thinned part 215 and the main body (including the cathode active material layer 212 and the cathode current collector 211) is no greater than that a total thickness H3 of the main body (including the cathode active material layer 212 and the cathode current collector 211) outside the thinned parts 215.

Accordingly, the insulating layer 213 on the thinned parts 215 does not protrude beyond the main faces 21c and 21d of the cathode plate 21, so the insulating layer 213 can be prevented from squeezing the anode plate 22 through the separator 23, and the safety performance of the laminated battery 1 can be further improved.

As shown in FIG. 9, in some embodiments, the thinned parts 215 are in a cuboid shape, a thickness H1 along a direction perpendicular to the main faces 21c and 21d is 5 µm or less, and a length L1 along the axial direction AX is 0.5 -5 mm.

Accordingly, the thinned parts 215 are formed into a cuboid shape, and the thickness along the direction perpendicular to the main faces 21c and 21d is 5 µm or less, and the length along the axial direction AX is 0.5 -5 mm, so that the insulating layer 213 can wrap the burrs extending from the bottom face 21b to the main faces 21c and 21d without occupying a significant volume of the main body, thereby ensuring that the energy density of the battery is sufficiently high.

In some embodiments, in the cathode plates 11, 21, the insulating layers 113, 213 are realized by one of spray coating, spot coating, and dip coating.

Thus, since the insulating layers 113, 213 are formed on the cathode plates 11, 21 in advance, the forming method of the insulating layers 113, 213 will not be hindered by the structure of the laminated battery 1 or the wound battery 2, and the insulating layers 113, 213 can be formed by one of spray coating, spot coating, and dip coating, thus the manufacturing process can be simplified.

In some embodiments, in the cathode plates 11, 21, a ceramic slurry for forming the insulating layer 113, 213 includes at least a ceramic material, a binder, and a solvent, the ceramic material accounts for 10 -70wt%, and the binder accounts for 1~5wt%, and the viscosity of the ceramic slurry is 100 -1000 mPa·s.

Thus, the insulating layers 113, 213 are made by using the ceramic slurry including at least the ceramic material, the binder, and the solvent, so the insulating properties and adhesiveness of the insulating layers 113, 213 can be ensured, and since the ceramic material accounts for 10-70wt%, the binder accounts for 1-5wt%, and the viscosity of the ceramic slurry is 100 -1000 mPa·s, insufficient insulation due to the ceramic material being too little can be avoided, and insufficient adhesion leading to the peeling off of the insulating layers 113, 213 can also be avoided.

In some embodiments, the ceramic material is one of pseudoboehmite, magnesium oxide, silicon carbide, and silicon nitride, preferably pseudoboehmite. The binder is one or a combination of polyvinylidene fluoride, polyacrylate, methyl acrylate, ethyl acrylate, 2-methyl methacrylate, and 2-ethyl methacrylate, preferably polyvinylidene fluoride. The solvent is N-methylpyrrolidone.

Therefore, by adopting cheap and easily available materials, the manufacturing costs can be reduced to facilitate the industrial production.

### [Examples]

Hereinafter, examples of the present application will be described. The examples described below are exemplary and are only used for explaining the present application, and should not be construed as limiting the present application. If no specific technique or condition is indicated in the examples, it shall be carried out according to the technique or condition described in the literature in the art or according to the product specification. The reagents or instruments used without indication of the manufacturer were all commercially available conventional products.

### (Example 1)

### 1. Preparation of a cathode plate

A cathode active material was coated on both sides of a cathode current collector, after cold pressing and cutting, a plurality of main bodies of a cathode plate with burrs on the cutting surfaces (the first side face to the fourth side face) were obtained. The main bodies of the cathode plate were stacked with each other, and a ceramic slurry was spray-coated on the first side face to the fourth side face, except for the cathode tab, completely covering (100% coverage) the first side face to the fourth side face, and a length extending on an end face is no more than 0.5 mm, and then was dried to obtain a cathode plate. In the ceramic slurry, the ceramic material accounted for 60wt%, the binder accounted for 5wt%, and the viscosity of the ceramic slurry was 800 mPa·s. The thickness of the insulating layer was 10 µm, and the length extending on the end face of the cathode plate is no more than 0.5 mm.

### 2. Preparation of an anode plate

An anode active material was coated on both sides of an anode current collector, and after cold pressing and cutting, an anode plate was obtained.

### 3. Separator

A continuous separator was adopted.

### 4. Assembly

The separator was folded in a Z shape, and a laminated battery of Example 1 was obtained by assembling in an order of "separator-anode plate-separator-cathode plate-separator-anode plate...". Here, a design in which the cathode plate exceeded the anode plate was adopted.

### (Example 2)

A laminated battery of Example 2 was obtained in the same manner as in Example 1, except that no insulating layer was coated on a first side face where a cathode tab was arranged.

### (Comparative Example 1)

A laminated battery of Comparative Example 1 was obtained in the same manner as in Example 1, except that no insulating layer was coated on a cathode plate.

### (Comparative Example 2)

A laminated battery of Comparative Example 2 was obtained in the same manner as in Example 1, except that a thickness of the insulating layer was 1 µm.

A hundred laminated batteries were prepared according to the respective above-mentioned Example 1, Example 2, Comparative Example 1, and Comparative Example 2, and an insulation withstand voltage test (Hi-pot test) was carried out on these laminated batteries to detect whether there were burrs penetrating the separator. The number of batteries that fail the insulation withstand voltage test was recorded, and their percentage to the total number was calculated and recorded in the column of the probability of burrs penetrating the separator in Table 1. In addition, with respect to the above-mentioned Example 1, Example 2, Comparative Example 1, and Comparative Example 2, additional ten laminated batteries were prepared respectively, which have an overhung design with the cathode plate designed to exceed the anode plate (overhang). Because this design accelerates lithium deposition, the charging and discharging cycles of these laminated batteries were carried out to detect lithium dendrites overlapping with burrs or leaking aluminum (a leaked cathode current collector). The number of failed batteries during the charging cycles was recorded, and their percentages to the total number were calculated and recorded in the columns of the probability of burrs penetrating the separator and the failure probability after burrs overlapping the lithium dendrites in Table 1.

**Table 1 Evaluation results of laminated batteries.**

| | Distribution of insulating layer | Extension length of insulating layer | Thickness of insulating layer | Ease of forming insulating layer | Probability of burrs penetrating the separator | Failure probability after burrs overlapped the lithium dendrites |
|---|---|---|---|---|---|---|
| Example 1 | First side face-fourth side face | ≤ 0.5 mm | 10 µm | Intermediate | 1% | 0/10 |
| Example 2 | Second side face-fourth side face | ≤ 0.5 mm | 10 µm | Easy | 10% | 1/10 |
| Comparative Example 1 | None | / | / | / | 75% | 10/10 |
| Comparative Example 2 | First side face-fourth side face | ≤ 0.5 mm | 1 µm | Intermediate | 60% | 9/10 |

Table 1 shows the evaluation results of laminated batteries. It can be found from Table 1, when no insulating layer was arranged on the cutting surfaces of the cathode plate, as in Comparative Example 1, the burrs on the cutting surfaces were exposed, and the risk of burrs penetrating the separator was extremely high, with a probability of 75%. The risk of cycle charging failure caused by lithium deposition and burrs or aluminum leakage caused by the cathode plate exceeding the anode plate was also the greatest, and all ten laminated batteries failed. When the insulating layer was coated on the four cutting surfaces of the cathode plate, that is, the first side face to the fourth side face, while the thickness of the insulating layer was too low, as in Comparative Example 2, the ceramic coating could not completely wrap the burrs, and the risk of short circuit caused by ruptured separator by the burrs and the risk of cycle charging failure could not be lowered to an ideal level. However, in Example 1 of the present application, after the four cut surfaces, that is, the first side face to the fourth side face, of the cathode plate of the laminated battery were coated with an insulating layer having a certain thickness, the risk of short circuit caused by ruptured separator by the burrs and the risk of cycle charging failure were lowered to a minimum. Since the first side face of the laminated battery has a cathode tab protruding from the main body, coating an insulating layer on the first side face is relatively complicated, which affects production efficiency. As in Example 2, coating the insulating layer on other cutting surfaces other than the first side face, that is, the second side face to the fourth side face, could also better reduce the risk of short circuit caused by burrs penetrating the separator and the risk of cycle charging failure, while taking into account the production efficiency.

### (Example 3)

### Preparation of a cathode plate

A cathode active material was coated on both sides of the cathode current collector, after cold pressing and cutting, main bodies of a cathode plate with burrs on a plurality of cutting surfaces (a top face and a bottom face) was obtained, the main bodies of the cathode plate were stacked, a ceramic slurry was spray-coated on the top and bottom faces, completely covering (100% coverage) the top and bottom faces except for the cathode tab, and a length extending on main faces was no greater than 0.5 mm, and then was dried to obtain the cathode plate. In the ceramic slurry, a ceramic material accounted for 60wt%, a binder accounted for 5wt%, and the viscosity of the ceramic slurry was 800 mPa·s. The thickness of the insulating layer on the cut surfaces was 10 µm, and the length extending on the main faces of the cathode plate was no more than 0.5 mm.

### 2. Preparation of an anode plate

An anode active material was coated on both sides of an anode current collector, and after cold pressing and cutting, the anode plate was obtained.

### 3. Winding

The components were placed in an order of "separator-anode plate-separator-cathode plate", one end of the cathode plate, the anode plate, and two separators was fixed on a discharge roller, and the other end was stacked together and fixed on a winding shaft. A motor was used to rotate the winding shaft to wind the cathode plate, the anode plate, and the two separators to obtain a wound battery of Example 3.

### (Example 4)

A wound battery of Example 4 was obtained in the same manner as in Example 3, except that no insulating layer was coated on a top face where a cathode tab was arranged.

### (Example 5)

A wound battery of Example 5 was obtained in the same manner as in Example 3, except that no insulating layer was coated on a top face where a cathode tab was arranged, and thinned parts having an insulating layer were formed on a bottom face, a length of the thinned parts along an axial direction was 5 mm, and a thickness of the insulating layer in the thinned parts was 5 µm.

### (Comparative Example 3)

A wound battery of Comparative Example 3 was obtained in the same manner as in Example 3, except that no insulating layer was coated on the cathode plate.

### (Comparative Example 4)

A wound battery of Comparative Example 4 was obtained in the same manner as in Example 3, except that no insulating layer was coated on a top face where a cathode tab was arranged, and thinned parts having an insulating layer were formed on a bottom face, a length of the thinned parts along an axial direction was 5 mm, and a thickness of the insulating layer in the thinned parts was 2 µm.

### (Comparative Example 5)

A wound battery of Comparative Example 5 was obtained in the same manner as in Example 3, except that no insulating layer was coated on a top face where a cathode tab was arranged, and thinned parts having an insulating layer were formed on a bottom face, a length of the thinned parts along an axial direction was 5 mm, a thickness of the insulating layer in the thinned parts was 10 µm, and a thickness of the insulating layer on the bottom face was 1 µm.

A hundred wound batteries were prepared according to the respective above-mentioned Example 3-Example 5, and Comparative Example 3-Comparative Example 5, and an insulation withstand voltage test (Hi-pot test) was carried out on these wound batteries to detect whether there were burrs penetrating the separator. The number of batteries that fail the insulation withstand voltage test was recorded, and their percentage to the total number was calculated and recorded in the column of the probability of burrs penetrating the separator in Table 2. In addition, with respect to Example 3-Example 5, and Comparative Example 3-Comparative Example 5, additional ten wound batteries were prepared respectively, in which the cathode plate was designed to exceed the anode plate (overhang). Because this design accelerated lithium deposition, the charging and discharging cycles of these laminated batteries were carried out to examine lithium dendrites overlapping with burrs or leaking aluminum (a leaked cathode current collector). The number of failed batteries during the charging cycles was recorded, and their percentage to the total number was calculated and recorded in the columns of failure probability after burrs overlapping the lithium dendrites in Table 2. In addition, based on Comparative Example 3, the percentages of (volume) energy densities of Example 3-Example 5 and Comparative Example 4-Comparative Example 5 were calculated by known methods, and recorded in the energy density column in Table 2.

**Table 2 Evaluation results of wound batteries.**

| | Distribution of insulating layer | Extension length of insulating layer on main faces | Thickness of insulating layer | Existence of thinned parts and sizes | Probability of burrs penetrating separator | Failure probability after burrs overlapped lithium dendrites | Energy density (with respect to Example 3) | Damage of insulating layer to anode plate | Processing complexity |
|---|---|---|---|---|---|---|---|---|---|
| Example 3 | Top face and bottom face | ≤ 0.5 mm | 10 µm | No | 1% | 0/10 | 100% | Barely | High |
| Example 4 | Bottom face | ≤ 0.5 mm | 10 µm | No | 5% | 1/10 | 100% | Barely | Low |
| Example 5 | Bottom face and thinned parts | 5 mm | Bottom face: 10 µm; thinned parts: 5 µm | Yes (thickness: 5 µm, length: 5 mm) | 10% | 1/10 | 99.7% | None | High |
| Comparative Example 3 | None | / | / | No | 75% | 10/10 | 100% | / | / |
| Comparative Example 4 | Bottom face and thinned parts | 5 mm | Bottom face: 10 µm; thinned parts: 2 µm | No | 10% | 1/10 | 100% | Extremel y large | High |
| Comparative Example 5 | Bottom face and thinned parts | 10 mm | Bottom face: 1 µm; thinned parts: 10 µm | Yes (thickness: 10 µm, length: 10 mm) | 60% | 9/10 | 98.8% | Barely | High |

Table 2 shows the evaluation results of wound batteries. According to Table 2, when no insulating layer was provided on the cutting surfaces of the cathode plate, that is, the top face and the bottom face, as in Comparative Example 3, the probability of burrs on the cutting edges penetrating the separator was extremely high, and the risk of short circuit caused by burrs penetrating the separator was at a maximum, and the risk of cycle charging failure after the lithium dendrite overlapped the burrs was also the greatest. When an insulating layer was attached to the top and bottom faces of the cathode plate, and the length of the insulating layer extending on the main faces did not exceed 0.5 mm, as in Example 3, the probability of burrs penetrating the separator was extremely low, and the risk of short circuit caused by burrs penetrating the separator was extremely large, and the risk of cycle charging failure was extremely small. When the insulating layer was only attached to the bottom face of the cathode plate, and the length of the insulating layer extending on the main faces was no more than 0.5 mm, as in Example 4, the probability of burrs penetrating the separator was also very low, and the risk of cycle charging failure was small. When thinned parts were not provided on the bottom face of the cathode plate, and the length of the insulating layer extending on the main faces was greater than 0.5 mm, after winding the cathode plate, the anode plate, and the two separators, the insulating layer on areas on the main faces close to the bottom face was compressed and protruded in a strip shape, causing certain compression on the anode plate and damaging the anode plate, as in Comparative Example 4. In regard to this, when thinned parts were provided on the bottom face of the cathode, and the thickness of the thinned parts was greater than the thickness of the insulating layer arranged on the thinned parts, although the energy density of the battery had a certain loss, for circumstances like defects caused by separator shrinkage or the cathode plate exceeding the anode plate, the insulating layer of the thinned parts can effectively prevent the short circuit caused by the direct overlap between the cathode plate and the anode plate, and effectively prevent cycle charging failure due to the lithium dendrite overlapping the burrs, as in Example 5. Although the effectiveness of protection against the short circuit caused by direct overlap between the cathode plate and the anode plate increased as the length of the thinned parts, namely the length on the main faces became longer, but the energy density loss of the battery was also greater, as in Comparative Example 5.

In addition, laminated batteries and wound batteries were produced in the same manner as in the above-mentioned Examples 1-5 and the above-mentioned Comparative Examples 1-5 except for changing the degree of coverage of the insulating layer, such as changing to 95% and 98%, and evaluations were carried out according to the evaluation methods in Table 1 and Table 2. As a result, when the coverage of the insulating layer of the examples was 95% and 98%, respectively, the short-circuit risk caused by the burrs penetrating the separator was slightly higher than when the coverage was 100%, and the probability of the burrs penetrating the separator was 15% or less, and the failure probability after the burrs overlapped lithium dendrites was less than 1/10, which were all within the range that can fully ensure the safety of the battery.

It should be noted that the present application is not limited to the above-mentioned embodiments. The above-mentioned embodiments are merely exemplary examples, and embodiments that have substantially the same configuration as the technical idea and exert the same effects within the scope of the technical proposals of the present application are included in the technical scope of the present application. In addition, without departing from the scope of the present application, various modifications added to the embodiments that are conceivable by those skilled in the art, and other forms constructed by combining some components in the embodiments are also included in the scope of the present application.

## Claims

1. A cathode plate, **characterized in that**:
the cathode plate is arranged in a laminated battery, and the cathode plate comprises:
a main body in a cuboid shape, formed by stacking a cathode active material layer and a cathode current collector in a first direction, the main body having four side faces and two end faces, the two end faces being arranged oppositely to each other in the first direction, and the four side faces being the first side face to the fourth side face and being respectively connected to the two end faces along the first direction;
a cathode tab, formed by the cathode current collector extending from the first side face to an outside of the main body; and
an insulating layer, formed on the second side face to the fourth side face and covering 95% or more of each side face of the second side face to the fourth side face.

2. The cathode plate according to claim 1, wherein:
the insulating layer is also formed on the first side face and covers 95% or more of all other areas of the first side face except an area where the cathode tab is formed.

3. The cathode plate according to any one of claims 1 to 2, wherein:
the insulating layer extends from the side faces on which the insulating layer is formed to the end faces connected to the side faces, and a length extending on the end faces that are connected to the side faces is no more than 0.5 mm.

4. The cathode plate according to any one of claims 1 to 3, wherein:
a thickness of the insulating layer on the side faces on which the insulating layer is formed is 2 -30 µm.

5. The cathode plate according to any one of claims 1 to 4, wherein:
the insulating layer is coated by one of spray coating, spot coating, and dip coating.

6. The cathode plate according to any one of claims 1 to 5, wherein:
a ceramic slurry for making the insulating layer comprises at least a ceramic material, a binder, and a solvent, and the ceramic material accounts for 10 -70wt%, the binder accounts for 1 -5wt%, and a viscosity of the ceramic slurry is 100 -1000 mPa·s.

7. The cathode plate according to claim 6, wherein:
the ceramic material is one of pseudoboehmite, magnesium oxide, silicon carbide, and silicon nitride; the binder is one or a combination of polyvinylidene fluoride, polyacrylate, methyl acrylate, ethyl acrylate, 2-methyl methacrylate, and 2-ethyl methacrylate; and the solvent is N-methylpyrrolidone.

8. The cathode plate according to claim 6, wherein:
the ceramic material is pseudoboehmite, and the binder is polyvinylidene fluoride.

9. A cathode plate, **characterized in that**:
the cathode plate is arranged in a wound battery, the cathode plate comprises:
a main body capable of being wound into a helical shape around an axial direction, the main body being formed by stacking a cathode active material layer and a cathode current collector, the main body having two main faces, and the two main faces being two opposite faces along a stacking direction of the cathode active material layer and the cathode current collector;
a cathode tab, formed by the cathode current collector extending from a top face to an outside of the main body along the axial direction, the top face being perpendicular to the axial direction and connected with the two main faces; and
an insulating layer, formed on a bottom face and covering 95% or more of the bottom face, the bottom face being opposite to the top face in the axial direction and being perpendicular to the axial direction and connected with the two main faces.

10. The cathode plate according to claim 9, wherein:
the insulating layer is also formed on the top face and covers 95% or more of all other areas of the top face except an area where the cathode tab is formed.

11. The cathode plate according to any one of claims 9 to 10, wherein:
the insulating layer extends from the bottom face to main faces connected to the bottom face, and a length extending on the main faces connected to the bottom face is no greater than 0.5 mm.

12. The cathode plate according to any one of claims 9 to 11, wherein:
a thickness of the insulating layer on the bottom face is 2 -30 µm.

13. The cathode plate according to any one of claims 9 to 12, wherein:
two thinned parts recessed toward the top face are respectively provided on the bottom face in areas connected to the two main faces; and
the insulating layer is arranged on the thinned parts.

14. The cathode plate according to claim 13, wherein:
a sum of thicknesses of the insulating layer in each thinned part and the main body is no greater than a thickness of the main body outside the thinned parts.

15. The cathode plate according to claim 13, wherein:
the thinned parts are in a cuboid shape, a thickness along a direction perpendicular to the main faces is 5 µm or less, and a length along the axial direction is 0.5 -5 mm.

16. The cathode plate according to any one of claims 9 to 15, wherein:
the insulating layer is coated by one of spray coating, spot coating, and dip coating.

17. The cathode plate according to any one of claims 9 to 16, wherein:
a ceramic slurry for making the insulating layer comprises at least a ceramic material, a binder, and a solvent, and the ceramic material accounts for 10-70wt%, the binder accounts for 1-5wt%, and a viscosity of the ceramic slurry is 100 -1000 mPa s.

18. The cathode plate according to claim 17, wherein:
the ceramic material is one of pseudoboehmite, magnesium oxide, silicon carbide, and silicon nitride; the binder is one or a combination of polyvinylidene fluoride, polyacrylate, methyl acrylate, ethyl acrylate, 2-methyl methacrylate, and 2-ethyl methacrylate; and the solvent is N-methylpyrrolidone.

19. The cathode plate according to claim 18, wherein:
the ceramic material is pseudoboehmite, and the binder is polyvinylidene fluoride.

20. A battery, wherein:
the battery comprises the cathode plate according to any one of claims 1 to 8, an anode plate, and a separator;
the cathode plate and the anode plate are alternately stacked in the first direction; and
the separator is sandwiched between the cathode plate and the anode plate.

21. A battery, wherein:
the battery comprises the cathode plate according to any one of claims 9 to 19, an anode plate, and a separator;
the cathode plate, the anode plate, and the separator are wound around the axial direction; and
the separator is sandwiched between the cathode plate and the anode plate.
